(19) **Europäisches Patentamt**

**European Patent Office**

**Office européen des brevets**

(11) **EP 1 045 544 A1**

(12) **DEMANDE DE BREVET EUROPEEN**

(43) Date de publication:
**18.10.2000 Bulletin 2000/42**

(51) Int. Cl.$^7$: **H04L 1/12**, H04L 1/00

(21) Numéro de dépôt: **00201223.5**

(22) Date de dépôt: **04.04.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **13.04.1999 FR 9904606**

(71) Demandeur:
**Koninklijke Philips Electronics N.V.**
**5621 BA  Eindhoven (NL)**

(72) Inventeur: **Carriere, Etienne**
**75008 Paris (FR)**

(74) Mandataire: **Chaffraix, Jean**
**Société Civile S.P.I.D.**
**156, Boulevard Haussmann**
**75008 Paris (FR)**

(54) **Réduction des clics pour signaux vocaux codés MICDA (ADPCM)**

(57)    Cet appareil électronique, un mobile du genre GSM, comporte :

- un récepteur (5) pour recevoir des paquets d'informations compressés représentant des signaux de paroles,
- un organe de vérification(52) de la qualité des paquets reçus,
- un organe de décompression (18) pour décomprimer lesdits paquets comportant une commande (Cmode) d'échelle de quantification,
- un organe pour restituer lesdites informations sous forme décompressée,

- un organe de commande (55) pour modifier ladite commande d'échelle en fonction des informations de qualité fournies par ledit organe de vérification.

Ainsi, l'invention permet de fournir à l'utilisateur une bonne restitution de la parole lorsqu'il y a une dégradation de la transmission.

Applications :    appareil radio téléphonique utilisant la norme G726 pour les signaux de parole.

FIG.2

**Description**

La présente invention concerne un appareil électronique comportant :

- un récepteur pour recevoir des paquets d'informations compressés,
- un organe de vérification de la qualité des paquets reçus,
- un organe de décompression pour décomprimer lesdits paquets comportant une commande d'échelle de quantification,
- un organe pour restituer lesdites informations sous forme décompressée.

L'invention trouve des applications notamment dans les appareils de radiotéléphonie mobiles qui utilisent des codeurs-décodeurs de paroles qui sont définis par la norme G726. Ce genre de codeur présente une grande sensibilité à certaines erreurs ce qui se traduit par des bruits de cliquetis fort désagréables produits lors du décodage.

L'article 〈Improved ADPCM Voice Signal Transmission Employing Click-Noise Detection Scheme for TDMA-TDD Personal Communication Systems〉de Shuji Kubota et al, paru dans IEEE Transacions on Vehicular Technology , Vol 46, NO. 1 de février 1997, décrit un appareil de ce genre qui a pour but de minimiser l'effet de ce bruit de cliquetis.

La présente invention propose un appareil du genre mentionné dans le préambule qui élimine dans une mesure supérieure à celle de l'art précité, les effets néfastes de ces bruits de cliquetis.

Pour cela, un tel appareil est remarquable en ce qu'il comporte en outre un organe de commande pour modifier ladite commande d'échelle en fonction des informations de qualité fournies par ledit organe de vérification.

La description suivante, faite en regard des dessins ci-annexés, le tout donné à titre d'exemple non limitatif, fera bien comprendre comment l'invention peut être réalisée.

La figure 1 montre un appareil conforme à l'invention.
La figure 2 montre le synoptique du fonctionnement de l'appareil conforme à l'invention.
Les figures 3 et 4 montrent des résultats obtenus par l'invention.

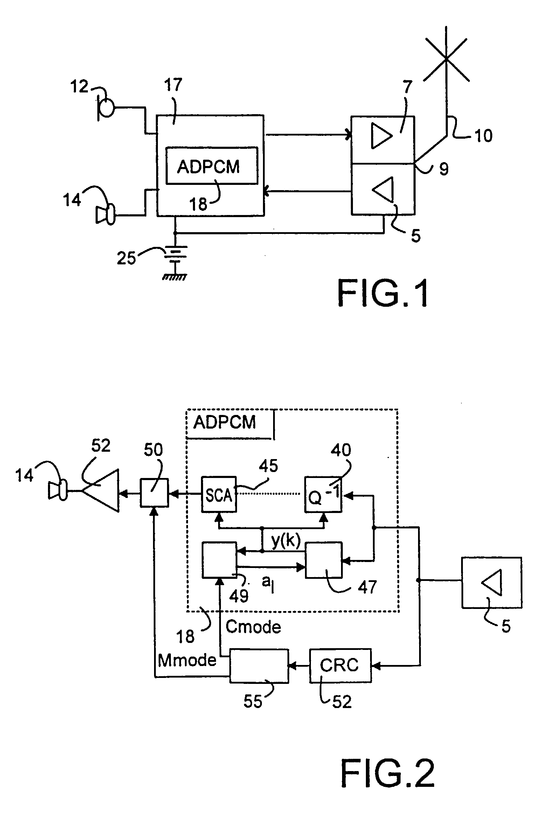

A la figure 1, on a représenté un appareil électronique conforme à l'invention. Cet appareil est un émetteur-récepteur tel une radio mobile dans un réseau cellulaire. Il se compose d'un ensemble d'émission-réception 5 comportant une partie émission 7 et une partie réception 9 pour, respectivement, émettre des signaux et en recevoir en utilisant une antenne 10. Les signaux à émettre proviennent notamment d'un microphone 12 et ceux qui sont reçus sont destinés notamment à un haut-parleur 14. Un organe de traitement 17 assure l'interface entre les signaux à basse fréquence concernant le microphone 12, le haut parleur 14 et l'ensemble 5. Le tout est alimenté par un accumulateur 25. Cet appareil est destiné à recevoir des données de signaux vocaux comprimés selon la recommandation G726. L'organe de traitement 17 comporte, notamment, des moyens 18 pour traiter ces données selon ladite norme.

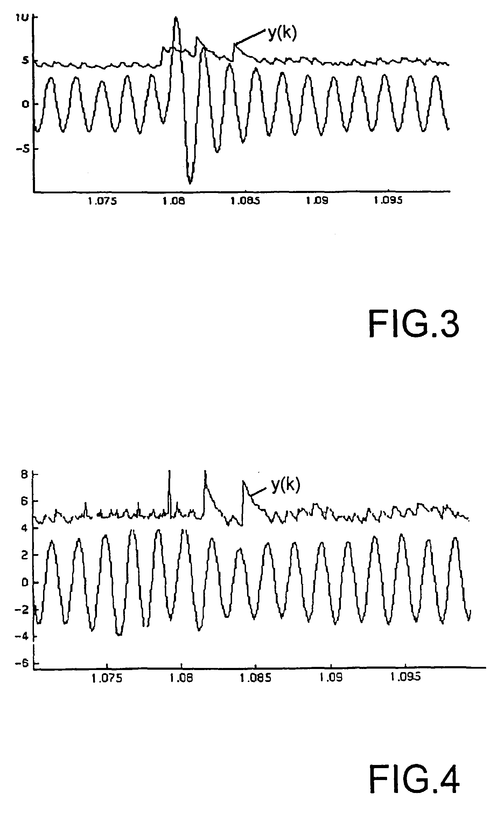

La figure 2 montre d'une façon schématique la fonction de décodage, toutes précisions le concernant peuvent être trouvées dans la norme précitée. Le décodage utilise un quantificateur inverse 40 qui fournit des échantillons qui dépendent d'un fadeur d'échelle $y(k)$ (voir la figure 3 de la norme G726). Ce fadeur d'échelle est aussi utilisé pour un organe d'ajustement de codage synchrone 45. Ce facteur d'échelle est déterminé par un organe de détermination de fadeur d'échelle 47 qui utilise une grandeur $a_1$ élaborée par un organe d'adaptation de vitesse 49. A chaque paquet de données reçu est affecté un code détecteur d'erreur (CRC), ce qui permet à un organe de vérification 52 de déterminer la qualité de la transmission en comparant les codes CRC transmis aux codes calculés après réception.

Conformément à l'invention, il est prévu un organe de commande 55 pour faire diminuer le fadeur d'échelle utilisé par le quantificateur inverse 40, notamment.

Pour cela, cette commande agit sur l'organe 49 pour modifier un paramètre $a_p(k)$. Cette adion est déclenchée si une condition 〈Cmode〉qui peut prendre deux états 〈ON〉et 〈OFF〉est à l'état 〈ON〉.La relation 2-7 décrite dans la norme G726 précitée s'écrit alors :

$$a_p(k) = \begin{cases} - \text{si Cmode} = \text{OFF} \\ (1-2^{-4})a_p(k-1)+2^{-3}, \text{si } |d_{ms}(k) - d_{ml}(k)| \geq 2^{-3}d_{ml}(k) \\ (1-2^{-4})a_p(k-1)+2^{-3}, \text{si y(k)} < 3 \\ (1-2^{-4})a_p(k-1)+2^{-3}, \text{si } t_d(k) = 1 \\ 1, \text{si } t_r(k) = 1 \\ (1-2^{-4})a_p(k-1), \text{sinon} \\ - \text{si Cmode} = \text{ON} \\ 0 \end{cases}$$

Ce paramètre va donc influencer le paramètre $a_l$ défini dans la relation (2-8) de cette norme. Ce paramètre va encore jouer finalement sur le facteur d'échelle conformément à la relation (2-4) de la norme.

Selon un autre aspect de l'invention l'organe de commande 55 délivre une autre commande : ‹‹Mmode ››à deux états ‹‹ON ›› et ‹‹OFF ›› qui agit sur un organe d'atténuation 50 pour des signaux fournis par le convertisseur 18. Ainsi les signaux restitués par le haut parleur 14 connecté à la sortie d'un amplificateur 52 dont l'entrée est connectée à la sortie de l'organe 50 sont fortement atténués voir supprimés lorsque la commande ‹‹Mmode ›› est à l'état ‹‹ON ››

Ces différentes commandes ‹‹Cmode ›› et ‹‹Mmode ›› sont définies par le tableau ci-dessous.

| Qualité de réception | Cmode | Mmode |
|---|---|---|
| Qualité satisfaisante | OFF | OFF |
| La qualité vient de se dégrader | ON | OFF |
| La qualité s'est dégradée depuis un certain temps. | OFF | ON |

Le certain temps peut être défini par un certain nombre de paquets consécutifs reçus avec des codes CRC transmis et CRC calculés différents.

La figure 3 montre un signal à la sortie de l'organe 45 sans les mesures préconisées par l'invention, le signal à transmettre est un signal de test d'amplitude et de fréquence constantes. Par suite d'erreur de transmission, le signal restitué présente un pic d'amplitude P.

La figure 4 montre le signal restitué avec les mesures préconisées par l'invention, les échantillons étant altérés de la même manière pour les deux figures. Ces figures 4 et 5 montrent aussi la variation du paramètre y(k).

**Revendications**

1.    Appareil électronique comportant:

    -    un récepteur pour recevoir des paquets d'informations compressés,
    -    un organe de vérification de la qualité des paquets reçus,
    -    un organe de décompression pour décomprimer lesdits paquets comportant une commande d'échelle de quantification,
    -    un organe pour restituer lesdites informations sous forme décompressée,
         caractérisé en ce qu'il comporte en outre un organe de commande pour modifier ladite commande d'échelle en fonction des informations de qualité fournies par ledit organe de vérification.

2.    Appareil selon la revendication 1, caractérisé en ce qu'il est muni en outre d'un organe d'atténuation pour atténuer l'amplitude des informations décompressées.

3.    Appareil selon la revendication 2, caractérisé en ce qu'il est prévu un organe de calcul pour déterminer trois modes de commande :

- un premier pour une bonne qualité reconnue, consistant à laisser inactives les commandes d'échelle et d'atténuation,
- un deuxième pour une qualité qui vient de se dégrader, consistant à rendre active la commande d'échelle, dès que la qualité se dégrade,
- un troisième pour une mauvaise qualité, consistant à rendre active la commande d'atténuation.

4. Procédé pour atténuer des bruits parasites dus à la décompression de données transmises, impliquant une commande de facteur d'échelle, procédé convenant à un appareil selon l'une des revendications 1 à 3, caractérisé en ce que le facteur d'échelle est modifié pour une mauvaise qualité des données reçues.

5. Procédé selon la revendication 4, caractérisé en ce qu'une commande d'atténuation de l'amplitude des données décompressées est activée lorsque la qualité des données reçues est mauvaise

6. Procédé selon la revendication 5, caractérisé en ce qu'il détermine trois modes de fonctionnement:

- un premier pour une bonne qualité reconnue, consistant à laisser inactives les commandes d'échelle et d'atténuation,
- un deuxième pour une qualité qui vient de se dégrader, consistant à rendre active la commande d'échelle, dès que la qualité se dégrade,
- un troisième pour une mauvaise qualité, consistant à rendre active la commande d'atténuation.

FIG.1

FIG.2

FIG.3

FIG.4

**Office européen des brevets**

# RAPPORT DE RECHERCHE EUROPEENNE

Numéro de la demande

EP 00 20 1223

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X<br>A | US 5 317 522 A (BONET LUIS A ET AL)<br>31 mai 1994 (1994-05-31)<br>* abrégé *<br>* colonne 2, ligne 34 - colonne 3, ligne 25 *<br>* figures 3,4,6,8 * | 1,2,4,5<br><br>3,6 | H04L1/12<br>H04L1/00 |
| D,A | KUBOTA S ET AL: "IMPROVED ADPCM VOICE SIGNAL TRANSMISSION EMPLOYING CLICK-NOISE DETECTION SCHEME FOR TDMA-TDD PERSONAL COMMUNICATION SYSTEMS"<br>IEEE TRANSACTIONS ON VEHICULAR TECHNOLOGY,US,IEEE INC. NEW YORK,<br>vol. 46, no. 1, page 108-113 XP000722288<br>ISSN: 0018-9545<br>* abrégé *<br>* section III *<br>* section IV *<br>* figures 3,6-8 * | 1-6 | |
| A | US 4 860 313 A (SHPIRO ZEEV)<br>22 août 1989 (1989-08-22)<br>* le document en entier * | 1,4 | DOMAINES TECHNIQUES RECHERCHES (Int.Cl.7)<br><br>H04L<br>H04B |

Le présent rapport a été établi pour toutes les revendications

| Lieu de la recherche | Date d'achèvement de la recherche | Examinateur |
|---|---|---|
| LA HAYE | 31 mai 2000 | Langinieux, F |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 20 1223

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

31-05-2000

| Document brevet cité au rapport de recherche | | Date de publication | Membre(s) de la famille de brevet(s) | | Date de publication |
|---|---|---|---|---|---|
| US 5317522 | A | 31-05-1994 | US | 5319573 A | 07-06-1994 |
| | | | CN | 1111421 A,B | 08-11-1995 |
| | | | EP | 0634845 A | 18-01-1995 |
| | | | JP | 7058710 A | 03-03-1995 |
| | | | CN | 1074570 A,B | 21-07-1993 |
| | | | DE | 69315231 D | 02-01-1998 |
| | | | DE | 69315231 T | 02-04-1998 |
| | | | EP | 0552005 A | 21-07-1993 |
| | | | JP | 5268106 A | 15-10-1993 |
| US 4860313 | A | 22-08-1989 | AUCUN | | |

EPO FORM P0460

Pour tout renseignement concernant cette annexe : voir Journal Officiel de l'Office européen des brevets, No.12/82